(19) Europäisches Patentamt
European Patent Office
Office européen des brevets

(11) EP 4 391 118 A1

(12) EUROPEAN PATENT APPLICATION
published in accordance with Art. 153(4) EPC

(43) Date of publication:
26.06.2024 Bulletin 2024/26

(21) Application number: 23763657.6

(22) Date of filing: 21.02.2023

(51) International Patent Classification (IPC):
$H01M\ 4/62$ (2006.01)  $H01M\ 4/139$ (2010.01)
$H01M\ 10/052$ (2010.01)

(52) Cooperative Patent Classification (CPC):
H01M 4/139; H01M 4/62; H01M 10/052;
Y02E 60/10

(86) International application number:
PCT/KR2023/002488

(87) International publication number:
WO 2023/167458 (07.09.2023 Gazette 2023/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.03.2022 KR 20220026843

(71) Applicant: LG Energy Solution, Ltd.
Seoul 07335 (KR)

(72) Inventors:
• NOH, Suk-In
Daejeon 34122 (KR)
• KIM, Na-Hyun
Daejeon 34122 (KR)
• PARK, Sang-Jun
Daejeon 34122 (KR)
• YANG, Hwi-Soo
Daejeon 34122 (KR)
• CHO, Hyung-Suk
Daejeon 34122 (KR)

(74) Representative: Hoffmann Eitle
Patent- und Rechtsanwälte PartmbB
Arabellastraße 30
81925 München (DE)

(54) **METHOD FOR PREPARING POLYMER SOLUTION FOR ELECTRODE SLURRY**

(57) The present disclosure relates to a method for preparing a polymer solution for an electrode slurry. According to the present disclosure, there is provided a method for preparing a polymer solution for an electrode slurry, which includes a step of obtaining a mixture solution by mixing a water-soluble polymer and a water-based solvent, and a step of irradiating ultraviolet (UV) light to the mixture solution for a predetermined time.

FIG. 1

**Description**

TECHNICAL FIELD

The present disclosure relates to a method for preparing a polymer solution for an electrode slurry for use in a secondary battery, and an electrode slurry for a secondary battery prepared therefrom.

The present application claims priority to Korean Patent Application No. 10-2022-0026843 filed on March 2, 2022 in the Korean Intellectual Property Office, the disclosures of which are incorporated herein by reference.

BACKGROUND ART

With the technological development and increased demand for mobile devices, the demand for secondary batteries as an energy source is increasing rapidly. Among such secondary batteries, lithium secondary batteries that exhibit high energy density and operating potential, long cycle life and low self-discharge rate have been commercialized and used widely.

An electrode of a lithium secondary battery is fabricated by mixing a positive electrode active material or a negative electrode active material with a binder resin component and dispersing the mixture in a solvent to prepare a slurry, applying the slurry on the surface of an electrode current collector, and then forming a mixture layer after drying the same.

The negative electrode slurry is generally classified into water-based and organic-based slurries. The water-based slurry is used in the general battery industry because it is advantageous in terms of price. A graphite-based active material which accounts for the most part of the negative electrode slurry is mainly dispersed in water.

However, since the graphite-based active material is generally hydrophobic, it is not dispersed easily in water and sedimentation occurs in the slurry over time, which can cause result in storage stability problems of the slurry. Specifically, since attempts are being made to increase the solid content in the negative electrode slurry for the purpose of increasing the loading amount of the negative electrode, improving the efficiency during a drying process, improving the migration of a binder, etc., the non-uniformity problem of the solid content in the slurry is becoming more prominent due to the dispersibility problem of the graphite-based active material and the storage stability of the slurry caused by the increased solid content. The dispersibility problem causes filter clogging during the transfer of the negative electrode slurry, which reduces the efficiency of the entire lithium secondary battery manufacturing process. In addition, the decreased storage stability of the slurry is an important issue because it causes different compositions in different parts of the negative electrode through formation of a nonuniform coating layer during the preparation of the negative electrode. In order to solve the dispersibility and storage stability problems of the graphite-based active material described above, the use of a thickener has been attempted.

For instance, there have been attempts to disperse the graphite-based active material and ensure the viscosity of the slurry using a thickener in the water-based negative electrode slurry. If the thickener itself has low solubility in water, a method of dissolving the thickener in distilled water in advance to prepare a thickening solution and using the same for preparation of a slurry is also adopted. However, in large-scale production conditions, in which the thickening solution needs to be stored for up to a week, the thickening solution may change over time, such as decrease in viscosity, etc., thereby reducing workability during an electrode coating process and deteriorating the quality of the electrode itself.

Accordingly, it is still necessary to develop an electrode slurry that can improve the dispersibility and storage stability of the graphite-based active material and improve the quality of the electrode.

DISCLOSURE

Technical Problem

In an aspect, the present disclosure is directed to providing a polymer solution that can improve the dispersibility and storage stability of a graphite-based active material in an electrode slurry for use in preparation of an electrode for a secondary battery, and a method for preparing the same.

In another aspect, the present disclosure is directed to providing a polymer solution for preparing the electrode slurry described above, which has appropriate viscosity and improved stability over time, and a method for preparing the same.

In another aspect, the present disclosure is directed to providing an electrode slurry with improved dispersibility and storage stability of a graphite-based active material, using the polymer solution described above, an electrode prepared using the same, and a lithium secondary battery including the electrode.

Technical Solution

In an aspect of the present disclosure, there is provided a method for preparing a polymer solution for an electrode slurry according to the following exemplary embodiments.

According to a first exemplary embodiment, there is provided a method for preparing a polymer solution for an electrode slurry, which includes: a step of obtaining a mixture solution by mixing a water-soluble polymer and a water-based solvent; and a step of irradiating ultraviolet (UV) light to the mixture solution for a predetermined time.

According to a second exemplary embodiment, in the first exemplary embodiment, the water-soluble polymer may include polyvinylidene fluoride (PVDF), polyvinyl alcohol (PVA), starch, polyvinylpyrrolidone (PVP), polytetrafluoroethylene (PTFE), polyethylene (PE), polypropylene (PP), ethylene-propylene-diene terpolymer (EPDM), sulfonated EPDM, styrene-butadiene rubber, fluorine rubber, methyl cellulose (MC), ethyl cellulose (EC), carboxymethyl cellulose (CMC), carboxyethyl cellulose (CEC), hydroxyethyl cellulose, benzyl cellulose, trityl cellulose, cyanoethyl cellulose, aminoethyl cellulose, nitrocellulose, cellulose ether, regenerated cellulose, hydroxypropyl cellulose (HPC), copolymers thereof, or mixtures thereof.

According to a third exemplary embodiment, in the first or second exemplary embodiment, the water-soluble polymer may include carboxymethyl cellulose (CMC).

According to a fourth exemplary embodiment, in any of the first to third exemplary embodiments, the water-soluble polymer may have a weight-average molecular weight ($M_w$) of 500,000-5,000,000 g/mol.

According to a fifth exemplary embodiment, in any of the first to fourth exemplary embodiments, the water-soluble polymer may be in the form of a powder.

According to a sixth exemplary embodiment, in any of the first to fifth exemplary embodiments, the water-soluble polymer may be contained at a content of 0.1-5 wt% based on the total weight of the water-based solvent.

According to a seventh exemplary embodiment, in any of the first to sixth exemplary embodiment, the wavelength of the irradiated ultraviolet light may be 240-400 nm.

According to an eighth exemplary embodiment, in any of the first to seventh exemplary embodiments, the wavelength of the irradiated ultraviolet light may be 240-260 nm.

According to a ninth exemplary embodiment, in any of the first to eighth exemplary embodiments, the ultraviolet light may be irradiated while the mixture solution is being prepared.

According to a tenth exemplary embodiment, in any of the first to ninth exemplary embodiments, the ratio of the ultraviolet light irradiation time to the total mixing time may be 1-100%.

According to an eleventh exemplary embodiment, in any of the first to tenth exemplary embodiments, the ultraviolet light may be irradiated throughout the total mixing time or irradiated for only a portion of the mixing time.

In another aspect of the present disclosure, there is provided a polymer solution for an electrode slurry according to the following exemplary embodiment.

According to a twelfth exemplary embodiment, there is provided a polymer solution for an electrode slurry, which is prepared according to any of the first to eleventh exemplary embodiments and exhibits a viscosity change defined by [Equation 1] of -20 to 5% when stored at 23 °C for 7 days.

[Equation 1]

$$\text{Viscosity change (\%)} = (\text{Vis(d)} - \text{Vis(i)})/\text{Vis(i)} \times 100$$

In Equation 1,

Vis(i) is the initial viscosity of an electrode slurry,
Vis(d) is the viscosity measured after storing for d days ($1 \leq d \leq 7$), and
the viscosity values are measured at 23 °C using a Brookfield viscometer (DV2T viscometer, 12 rpm, spindle 24).

According to another aspect of the present disclosure, there is provided an apparatus for preparing a polymer solution according to the following exemplary embodiment.

According to a thirteenth exemplary embodiment, there is provided an apparatus for preparing a polymer solution for an electrode slurry, which includes: a mixing unit; and an ultraviolet light irradiation unit configured to irradiate ultraviolet light to a mixture loaded in the mixing unit.

Advantageous Effects

A method for preparing a polymer solution for an electrode slurry according to an exemplary embodiment of the present disclosure can improve the dispersibility and storage stability of a graphite-based active material in an electrode slurry when preparing an electrode for use in a secondary battery.

The method for preparing a polymer solution for an electrode slurry according to an exemplary embodiment of the present disclosure can improve not only workability during preparation of the electrode slurry but also the quality of the electrode slurry, the electrode and the secondary battery due to appropriate viscosity and improved stability over time.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not to be construed as being limited to the drawings.

FIG. 1 shows a result of measuring the viscosity of polymer solutions prepared according to an exemplary embodiment of the present disclosure with the lapse of storage time.

FIG. 2 shows the surface image of an electrode slurry wherein a graphite-based active material is dispersed using a polymer solution for an electrode slurry prepared in Comparative Example 1 immediately after preparation.

FIG. 3 shows the surface image of an electrode slurry wherein a graphite-based active material is dispersed using a polymer solution for an electrode slurry prepared in Comparative Example 2 immediately after preparation.

FIG. 4 shows the image of an electrode slurry wherein a graphite-based active material is dispersed using a polymer solution for an electrode slurry prepared in Comparative Example 1 after passing through a filter.

FIG. 5 shows the image of an electrode slurry wherein a graphite-based active material is dispersed using a polymer solution for an electrode slurry prepared in Comparative Example 2 after passing through a filter.

BEST MODE

Hereinafter, the present disclosure is described in detail.

A method for preparing a polymer solution for an electrode slurry according to an aspect of the present disclosure includes: a step of obtaining a mixture solution by mixing a water-soluble polymer and a water-based solvent; and a step of irradiating ultraviolet (UV) light to the mixture solution for a predetermined time.

In the present specification, the polymer solution may be used for the purpose of dispersing a solid content such as an active material, etc. when preparing an electrode slurry for use in manufacturing an electrode of a secondary battery. But, the use of the polymer solution is not limited thereto.

The step of obtaining the mixture solution is a step wherein mixing the water-soluble polymer and the water-based solvent so that the water-soluble polymer is dispersed uniformly.

The mixing for obtaining the mixture solution may be performed by various methods for mixing the water-soluble polymer and the water-based solvent, without special limitation.

In an exemplary embodiment of the present disclosure, the water-soluble polymer is not specially limited as long as it can function as a thickener in the electrode slurry. Due to the thickening function of the water-soluble polymer, an advantageous effect can be exhibited in terms of the dispersibility of an active material, for example, graphite, silicon compounds, silicon oxide/carbide composites or mixtures thereof, particularly in the electrode slurry.

In an exemplary embodiment of the present disclosure, the water-soluble polymer may include a biodegradable polymer. For example, the water-soluble polymer may have a biodegradable property and can be degraded by bacteria present in a stirring tank or a raw material supply hopper when a polymer solution prepared therefrom is stored in the stirring tank or the hopper for use in the preparation of an electrode slurry.

In another exemplary embodiment of the present disclosure, the water-soluble polymer may include, for example, polyvinylidene fluoride (PVDF), polyvinyl alcohol (PVA), starch, polyvinylpyrrolidone (PVP), polytetrafluoroethylene (PTFE), polyethylene (PE), polypropylene (PP), ethylene-propylene-diene terpolymer (EPDM), sulfonated EPDM, styrene-butadiene rubber, fluorine rubber, methyl cellulose (MC), ethyl cellulose (EC), carboxymethyl cellulose (CMC), carboxyethyl cellulose (CEC), hydroxyethyl cellulose, benzyl cellulose, trityl cellulose, cyanoethyl cellulose, aminoethyl cellulose, nitrocellulose, cellulose ether, regenerated cellulose, hydroxypropyl cellulose (HPC), copolymers thereof or mixtures thereof, although not being limited thereto.

In an exemplary embodiment of the present disclosure, the water-soluble polymer may include carboxymethyl cellulose (CMC). When the water-soluble polymer includes carboxymethyl cellulose, an advantageous effect may be achieved in terms of the dispersibility and phase stability of an electrode slurry, specifically a negative electrode water-based slurry for a lithium-ion secondary battery, although the present disclosure is not limited thereto. More specifically, when the water-soluble polymer includes carboxymethyl cellulose, superior dispersibility of an active material in the electrode slurry may be achieved and appropriate viscosity may be conferred to the electrode slurry due to superior solubility of the carboxymethyl cellulose in the water-based electrode slurry. As a result, an advantageous effect may

**EP 4 391 118 A1**

be exhibited in terms of suppressing the degree of reaggregation or sedimentation of the active material dispersed in the electrode slurry.

In another exemplary embodiment of the present disclosure, the water-soluble polymer may have a weight-average molecular weight ($M_w$) of, for example, 500,000-5,000,000 g/mol. Specifically, the water-soluble polymer may have a weight-average molecular weight ($M_w$) of 750,000 g/mol or higher, 1,000,000 g/mol or higher or 1,500,000 g/mol or higher, and 4,000,000 g/mol or lower, 3,000,000 g/mol or lower or 2,500,000 g/mol or lower. When the weight-average molecular weight ($M_w$) of the water-soluble polymer is within the above-described ranges, an advantageous effect may be achieved in terms of the dispersion or thickening an electrode slurry, specifically a negative electrode water-based slurry for a lithium-ion secondary battery, although the present disclosure is not limited thereto. The weight-average molecular weight ($M_w$) may be a value measured by gel permeation chromatography (GPC).

In an exemplary embodiment of the present disclosure, the water-soluble polymer may be in the form of a powder.

In an exemplary embodiment of the present disclosure, the water-based solvent is not specially limited as long as it can dissolve the water-soluble polymer. For example, the water-based solvent may include water.

In another exemplary embodiment of the present disclosure, the water-based solvent may be water alone.

In an exemplary embodiment of the present disclosure, the water-soluble polymer may be mixed at a content of, for example, 0.1-5 wt% based on the total weight of the water-based solvent. Specifically, the water-soluble polymer may be contained at a content of 0.1 wt% or higher, 0.5 wt% or higher or 1 wt% or higher, and 5 wt% or lower, 4.5 wt% or lower, 4 wt% or lower, 3.5 wt% or lower or 3 wt% or lower, based on the total weight of the water-based solvent. When the content of the water-soluble polymer is within the above-described ranges, an advantageous effect may be achieved in terms of the convenience of preparing an electrode slurry, specifically a negative electrode slurry, and the increasing of amount of the solid content in the negative electrode slurry, although the present disclosure is not limited thereto.

In an exemplary embodiment of the present disclosure, in the step of obtaining the mixture solution by mixing the water-soluble polymer and the water-based solvent, the water-soluble polymer and the water-based solvent may be added to a mixer either simultaneously or sequentially. The order and method of the addition are not specially limited.

In another exemplary embodiment of the present disclosure, in the step of obtaining the mixture solution by mixing the water-soluble polymer and the water-based solvent, the water-based solvent may be added to a mixer first, and then a predetermined amount of the water-soluble polymer may be added. This may be advantageous in improving the quality of the finally prepared polymer solution for an electrode slurry by improving the scattering of fine powder occurring during large-scale production.

The method for preparing a polymer solution for an electrode slurry of the present disclosure includes a step of irradiating ultraviolet (UV) light to the mixture solution prepared above for a predetermined time.

In an exemplary embodiment of the present disclosure, a sterilizing effect on the bacteria proliferating in the mixer may be achieved by irradiating the ultraviolet light to the mixture solution of the water-soluble polymer and the water-based solvent. By preventing or reducing the degradation of the water-soluble polymer by the bacteria proliferating in the mixer, the viscosity of the polymer solution for an electrode slurry may be maintained appropriately and the stability over time may be improved, although the mechanism of the present disclosure is not limited thereto.

In particular, as described above, a water-soluble polymer, e.g., carboxymethyl cellulose, which has superior properties of improving the dispersibility of an active material and suppressing the reaggregation or sedimentation of the dispersed active material, may exhibit an insignificant effect when preparing an electrode slurry because of its biodegradable property. The effect of the biodegradable polymer such as carboxymethyl cellulose, etc. contained in the mixture solution as the water-soluble polymer may be improved remarkably by the irradiation of the ultraviolet light.

In the step of irradiating the ultraviolet light to the mixture solution, the mixture solution may be prepared and then the ultraviolet light may be irradiated, the ultraviolet light may be irradiated while the mixture solution is being prepared, or the ultraviolet light may be irradiated after the preparation of the mixture solution has been completed. That is to say, the order of the irradiation of the ultraviolet light is not specially limited.

In another exemplary embodiment of the present disclosure, in the step of irradiating the ultraviolet light, the ultraviolet light may be irradiated in a shielding container to prevent or minimize of the exposure of the ultraviolet light to the human body.

In an exemplary embodiment of the present disclosure, the irradiated ultraviolet light may have a wavelength of, for example, 240-400 nm. Although the wavelength of the ultraviolet light may be 10-400 nm in general, if the wavelength of the ultraviolet light is shorter than 240 nm, the stability of the polymer solution may be deteriorated due to the generation of ozone. Therefore, the lower limit of the wavelength of the ultraviolet light may be set to 240 nm.

In another exemplary embodiment of the present disclosure, if a means of reducing or preventing the generation of ozone by the irradiated ultraviolet light is equipped, the wavelength of the ultraviolet light may also be shorter than 240 nm as long as the sterilizing effect is not impaired.

In another exemplary embodiment of the present disclosure, the wavelength of the ultraviolet light may be specifically 240 nm or longer, 245 nm or longer, 250 nm or longer, 254 nm or longer or 280 nm or longer, and 400 nm or shorter, 380 nm or shorter, 370 nm or shorter, 360 nm or shorter, 350 nm or shorter, 340 nm or shorter, 320 nm or

5

shorter, 310 nm or shorter, 300 nm or shorter, 290 nm or shorter, 280 nm or shorter or 260 nm or shorter. More specifically, the wavelength of the ultraviolet light may be 240-300 nm or 240-260 nm. Further more specifically, the wavelength of the ultraviolet light may be 250-260 nm. When the wavelength of the ultraviolet light is within the above ranges, an advantageous effect may be achieved in terms of the sterilization of the water-soluble polymer in the mixture solution and prevention of degradation by bacteria, although the present disclosure is not limited thereto.

The irradiation time for which the ultraviolet light is irradiated by may be determined in consideration of the wavelength of the irradiated ultraviolet light, without special limitation.

In another exemplary embodiment of the present disclosure, the ultraviolet light may be irradiated for, for example, 1-300 minutes, specifically 10-180 minutes, when the total weight of the water-soluble polymer and the water-based solvent is 100 g, and the irradiation time may be increased proportionally to the total weight of the water-soluble polymer and the water-based solvent.

In an exemplary embodiment of the present disclosure, the ratio of the ultraviolet light irradiation time to the total mixing time may be, for example, 1-100%. Specifically, the ratio of the ultraviolet light irradiation time to the total mixing time may be 30-90%, 50-90%, 50-80% or 60-70%. When the ratio of the ultraviolet light irradiation time to the total mixing time is within the above ranges, an advantageous effect may be achieved in terms of the stability of the water-soluble polymer and process efficiency, although the present disclosure is not limited thereto.

In another exemplary embodiment of the present disclosure, the ultraviolet light may be irradiated after a predetermined time has passed after the mixing of the water-soluble polymer and the water-based solvent.

For example, the mixture solution obtained by mixing the water-soluble polymer and the water-based solvent may be stored in a storage container until an electrode slurry is prepared. After the mixture solution has been stored in the storage container, a polymer solution for an electrode slurry may be prepared by irradiating ultraviolet light to the stored mixture solution when preparing an electrode slurry.

In an exemplary embodiment of the present disclosure, stirring may be performed in the step of mixing the water-soluble polymer and the water-based solvent.

In an exemplary embodiment of the present disclosure, in the method for preparing a polymer solution for an electrode slurry, a polymer solution for an electrode slurry may be prepared by irradiating ultraviolet light while stirring the mixture solution of the water-soluble polymer and the water-based solvent in the mixer.

In an exemplary embodiment of the present disclosure, in the step of mixing the water-soluble polymer and the water-based solvent, the ultraviolet light may be irradiated for only a portion of the total mixing time.

In another exemplary embodiment of the present disclosure, the method for preparing a polymer solution for an electrode slurry may include the mixing step and the ultraviolet light irradiation step once or more times irrelevant of their order.

In another exemplary embodiment of the present disclosure, in the method for preparing a polymer solution for an electrode slurry, after the water-soluble polymer and the water-based solvent added to the mixer have been stirred for a predetermined time, ultraviolet light irradiation and stirring may be performed simultaneously.

According to the method, a polymer solution that can be used to disperse a solid content such as an active material, etc. when preparing an electrode slurry for use in a secondary battery may be prepared.

In an exemplary embodiment of the present disclosure, a polymer solution for an electrode slurry prepared by the above-described method may exhibit superior stability over time with the lapse of storage time while having viscosity useful for preparation of an electrode slurry.

In an exemplary embodiment of the present disclosure, the manufacturing process of the electrode may be carried out, in order to improve process efficiency, by preparing a large amount of the polymer solution for an electrode slurry at once and then introducing the same for preparation of an electrode slurry after dividing into several portions. Therefore, it is preferred that the polymer solution for an electrode slurry has superior stability over time in terms of the efficiency of the electrode manufacturing process. For example, if the prepared polymer solution for an electrode slurry has stability over time for at least 7 days after the preparation, it is advantageous in that the efficiency of the electrode manufacturing process can be maximized.

In another aspect of the present disclosure, the polymer solution for an electrode slurry is prepared according to the method described above and exhibits a viscosity change defined by [Equation 1] of -20 to 5% when stored at 23 °C for 7 days.

[Equation 1]

$$\text{Viscosity change (\%)} = (Vis(d) - Vis(i))/Vis(i) \times 100$$

In Equation 1,

Vis(i) is the initial viscosity of an electrode slurry,

Vis(d) is the viscosity measured after storing for d days ($1 \leq d \leq 7$), and

the viscosity values are measured at 23 °C using a Brookfield viscometer (DV2T viscometer, 12 rpm, spindle 24).

In an exemplary embodiment of the present disclosure, the polymer solution for an electrode slurry may exhibit a viscosity of, for example, 5,000-50,000 cps at 23 °C after being stored for 7 days. Specifically, the polymer solution for an electrode slurry may exhibit a viscosity of 7,000-30,000 cps or 7,500-10,000 cps at 23 °C after being stored for 7 days. If the viscosity of the polymer solution for an electrode slurry after being stored for 7 days is within the above ranges, an advantageous effect may be achieved in terms of quality control of the electrode slurry in large-scale production, although the present disclosure is not limited thereto.

In another exemplary embodiment of the present disclosure, the change in the viscosity of the polymer solution for an electrode slurry with the lapse of storage time when stored for 7 days may be maintained within ±20%, specifically within -20 to +5%. The change in the viscosity may be specifically within ±5%, within ±4.5%, within ±4%, within ±3.5%, within ±3%, within ±2%, within ±1%, within ±0.8%, within ±0.7%, within ±0.6%, within ±0.5%, within ±0.3% or within ±0.2%.

In another exemplary embodiment of the present disclosure, the increase in the viscosity of the polymer solution for an electrode slurry may mean that the water-soluble polymer present in the polymer solution for an electrode slurry exists stably without being degraded and is swollen. Therefore, the change in the viscosity of the polymer solution for an electrode slurry with the lapse of storage time for 7 days may be specifically within +5%, within +4%, within +3%, within ±2%, within +1%, within ±0.8%, within ±0.7%, within ±0.6%, within ±0.5%, within ±0.3% or within +0.2%, although the present disclosure is not limited thereto.

An apparatus for preparing a polymer solution according to another aspect of the present disclosure includes a mixing unit and an ultraviolet light irradiation unit for irradiating ultraviolet light to a mixture loaded in the mixing unit.

In an exemplary embodiment of the present disclosure, the mixing unit may be a common mixer used to prepare a polymer solution and is not specially limited in type. For example, the mixing unit may include various mixers such as a PD mixer, a BTM mixer, a Soken mixer, a Corona mixer, etc.

In another exemplary embodiment of the present disclosure, the ultraviolet light irradiation unit may include any device capable of irradiating ultraviolet light having the wavelength described above and is not specially limited in type.

The polymer solution for an electrode slurry may be used as a dispersing solution for dispersing a solid content such as an active material in an electrode slurry for use in the preparation of an electrode of a secondary battery or as a thickening solution.

In the present disclosure, the electrode may be a positive electrode or a negative electrode included in a secondary battery.

In the present disclosure, the active material may be a negative electrode active material or a positive electrode active material.

In an exemplary embodiment of the present disclosure, the negative electrode active material may be, for example, graphite such as natural graphite, artificial graphite, etc.; carbon black such as acetylene black, ketjen black, channel black, furnace black, lamp black, thermal black, etc.; conductive fiber such as carbon fiber, metal fiber, etc.; fluorocarbon; metal powder such as aluminum, nickel powder, etc.; conductive whisker such as zinc oxide, potassium titanate, etc.; conductive metal oxide such as titanium oxide, etc.; conductive material such as a polyphenylene derivative, etc., or the like.

In another exemplary embodiment of the present disclosure, the negative electrode active material may include a graphite material.

In another exemplary embodiment of the present disclosure, the positive electrode active material may include, for example, one or more of: a lithium transition metal oxide; a lithium metal iron phosphate; lithium nickel manganese cobalt oxide; an oxide in which lithium nickel manganese cobalt oxide is partly substituted with another transition metal; or combinations thereof, although not being limited thereto. Specifically, the positive electrode active material may be, for example, a layered compound such as lithium cobalt oxide ($LiCoO_2$), lithium nickel oxide ($LiNiO_2$), etc. or a compound substituted with one or more transition metal; lithium manganese oxide such as $Li_{1+x}Mn_{2-x}O_4$ (wherein $0 \leq x \leq 0.33$), $LiMnO_3$, $LiMn_2O_3$, $LiMnO_2$, etc.; lithium copper oxide ($Li_2CuO_2$); vanadium oxide such as $LiVsOs$, $LiV_3O_4$, $V_2O_5$, $Cu_2V_2O_7$, etc.; Ni site-type lithium nickel oxide represented by $LiNi_{1-x}M_xO_2$ (wherein M is Co, Mn, Al, Cu, Fe, Mg, B or Ga and $0.01 \leq x \leq 0.3$); a lithium manganese composite oxide represented by $LiMn_{2-x}M_xO_2$ (wherein M is Co, Ni, Fe, Cr, Zn or Ta and $0.01 \leq x \leq 0.1$) or $Li_2Mn_3MO_8$ (wherein, M is Fe, Co, Ni, Cu or Zn); a lithium metal phosphate $LiMPO_4$ (wherein M is Fe, Co, Ni, or Mn); lithium nickel manganese cobalt oxide $Li_{1+x}(Ni_aCo_bMn_c)_{1-x}O_2$ ($0 \leq x \leq 0.03$, $0.3 \leq a \leq 0.95$, $0.01 \leq b \leq 0.35$, $0.01 \leq c \leq 0.5$ and $a + b + c = 1$); an oxide $Li_a[Ni_bCo_cMn_dAl_e]_{1-f}M1_fO_2$ wherein lithium nickel manganese cobalt oxide is partially substituted with aluminum (M1 is one or more selected from a group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$ and $0 \leq f \leq 0.1$); an oxide $Li_{1+x}(Ni_aCo_bMn_cM_d)_{1-x}O_2$ wherein lithium nickel manganese cobalt oxide is partially substituted with another

transition metal ($0 \leq x \leq 0.03$, $0.3 \leq a \leq 0.95$, $0.01 \leq b \leq 0.35$, $0.01 \leq c \leq 0.5$, $0.001 \leq d \leq 0.03$, $a + b + c + d = 1$ and M is any one selected from a group consisting of Fe, V, Cr, Ti, W, Ta, Mg and Mo), a disulfide compound; $Fe_2(MoO_4)_3$, etc., although not being limited thereto. In addition, the positive electrode active material may also be a sulfide, a selenide, a halide, etc.

In the present disclosure, the secondary battery may be a lithium secondary battery including a lithium-metal secondary battery, a lithium-ion secondary battery, a lithium polymer secondary battery, a lithium-ion polymer secondary battery, etc.

MODE FOR DISCLOSURE

Hereinafter, the present disclosure is described in further detail through examples. However, the following examples are only for illustrating the present disclosure and the scope of the present disclosure is not limited thereto.

**[Preparation of polymer solutions for electrode slurry]**

**Comparative Example 1**

A polymer solution was prepared by adding 0.7 kg of spherical carboxymethyl cellulose (CMC) powder having a weight-average molecular weight ($M_w$) of 2,000,000 g/mol and 34.3 kg of distilled water to a 50-L tank and stirring for 3 hours. The mixture was stirred using a BTM mixer under the condition of Anchor disper 50 rpm and Homo disper 1,000 rpm.

**Comparative Example 2**

A polymer solution was prepared in the same manner as in Comparative Example 1 except that polyvinylpyrrolidone (PVP) with a weight-average molecular weight ($M_w$) of 2,000,000 g/mol was used instead of carboxymethyl cellulose (CMC).

**Example 1**

A polymer solution was prepared in the same manner as in Comparative Example 1 except that, after stirring for 1 hour, ultraviolet light with a wavelength of 254 nm was irradiated using two UV lamps (20 W) equipped above the BTM mixer while stirring for 2 hours.

**Example 2**

A polymer solution was prepared in the same manner as in Example 1 except that ultraviolet light with a wavelength of 280 nm was irradiated.

**Example 3**

A polymer solution was prepared in the same manner as in Example 1 except that ultraviolet light with a wavelength of 300 nm was irradiated.

**Example 4**

A polymer solution was prepared in the same manner as in Example 1 except that ultraviolet light with a wavelength of 360 nm was irradiated.

**[Evaluation of physical properties of polymer solutions]**

Measurement of initial viscosity

The polymer solutions prepared in Comparative Example 1 and Examples 1-4 were stored in a PE container (bottle) immediately after the preparation. The PE container was contained in an open system.

The viscosity of each polymer solution was measured at 23 °C using a Brookfield viscometer (DV2T viscometer, 12 rpm, spindle 24) immediately after the preparation. The result is given in Table 1.

Evaluation of change in viscosity

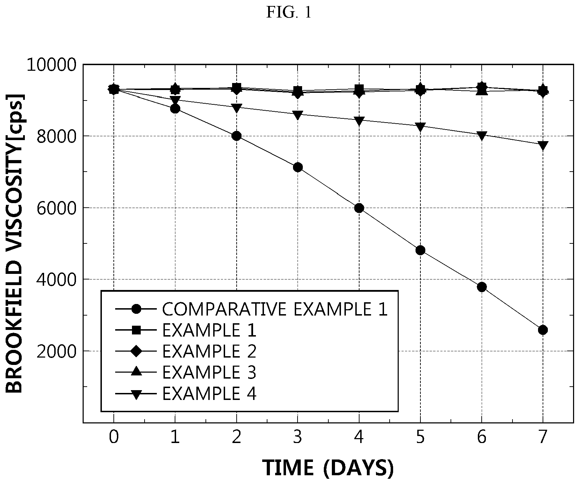

The viscosity of the polymer solutions prepared in Comparative Example 1 and Examples 1-4 was measured at 23 °C using the viscometer every 24 hours. The result is shown in Table 1 and FIG. 1.
The viscosity change calculated 7 days later according to [Equation 2] is given in Table 1.

[Equation 2]

$$\text{Viscosity change (\%)} = (\text{Vis}(7) - \text{Vis}(0))/\text{Vis}(0) \times 100$$

In Equation 2, Vis(i) is the initial viscosity of an electrode slurry, and Vis(7) is the viscosity measured after storing for 7 days.

Evaluation of dispersibility depending on water-soluble polymer

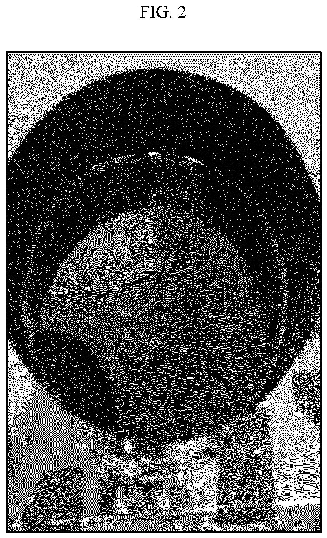

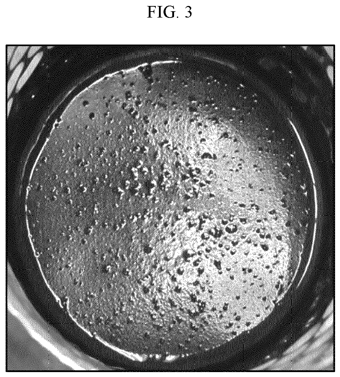

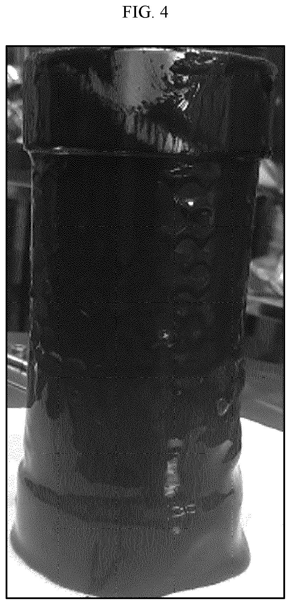

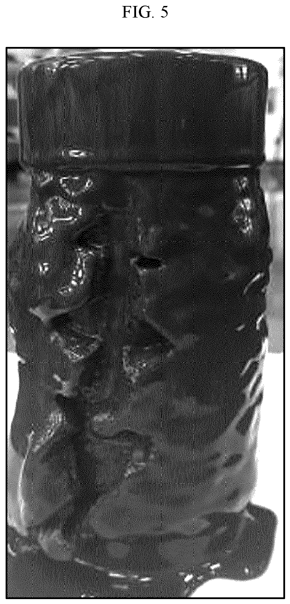

In order to evaluate the dispersibility of an active material depending on the water-soluble polymer, an electrode slurry was prepared by adding 100 g of graphite (POSCO) as a negative electrode active material to 105 mL of the polymer solution for an electrode slurry of Comparative Example 1 or Comparative Example 2 in a mixer and then stirring the mixture. The images of the electrode slurries immediately after the preparation are shown in FIG. 2 (Comparative Example 1) and FIG. 3 (Comparative Example 2).
In addition, the images of the electrode slurries after passing through a filter (HCB filter cartridge, ROKI TECHNO) are shown in FIG. 4 (Comparative Example 1) and FIG. 5 (Comparative Example 2).

[Table 1]

| | Wavelength [nm] | Brookfield viscosity of CMC solution [cps] | | | | | | | | Viscosity change (%) |
|---|---|---|---|---|---|---|---|---|---|---|
| | | Immediately after preparation | 1 day | 2 days | 3 days | 4 days | 5 days | 6 days | 7 days | |
| Comp. Ex. 1 | Off | 9283 | 8760 | 7980 | 7115 | 5961 | 4801 | 3785 | 2604 | -72.0 |
| Ex. 1 | 254 | 9223 | 9214 | 9323 | 9254 | 9328 | 9257 | 9312 | 9284 | 0.7 |
| Ex. 2 | 280 | 9208 | 9276 | 9280 | 9215 | 9187 | 9228 | 9315 | 9196 | -0.1 |
| Ex. 3 | 300 | 9316 | 9302 | 9291 | 9194 | 9243 | 9276 | 9227 | 9249 | -0.7 |
| Ex. 4 | 360 | 9247 | 9004 | 8796 | 8601 | 8445 | 8274 | 8008 | 7761 | -16.1 |

As seen from Table 1 and FIG. 1, the polymer solution prepared in Comparative Example 1 without irradiating ultraviolet light showed a viscosity comparable to that of the examples immediately after the preparation of the polymer solution, but showed poor stability over time with the lapse of storage time.
Also, as shown in FIG. 2 and FIG. 3, when the active material was dispersed in the CMC solution for an electrode slurry, the surface of the electrode slurry was smooth and no lump of undispersed active material was observed. In contrast, when the active material was dispersed in the PVP solution for an electrode slurry, lump of undispersed active material was observed on the surface of the electrode slurry.
In addition, as can be seen from FIG. 4 and FIG. 5, when the prepared electrode slurry was passed through a filter, the electrode slurry using the CMC solution for an electrode slurry (Comparative Example 1) passed through the filter without remaining undispersed active material. In contrast, the electrode slurry using the PVP solution for an electrode slurry (Comparative Example 2) showed filter clogging since the undispersed active material could not pass through the filter.
Accordingly, it was confirmed that the use of CMC in the polymer solution for an electrode slurry can result in superior dispersibility of the active material and, especially by irradiating ultraviolet light during the preparation of the polymer solution for an electrode slurry, the stability of the polymer solution for an electrode slurry over time can be ensured, thereby providing advantageous effects in terms of the preparation of an electrode slurry with superior dispersibility of the active material and the improvement of the performance of an electrode and a battery using the same.
Although the present disclosure has been described with reference to the examples and drawings, those having ordinary knowledge in the field to which the present disclosure belongs will be able to make various applications and modifications within the scope of the present disclosure based thereon.

**Claims**

1. A method for preparing a polymer solution for an electrode slurry, comprising:

   a step of obtaining a mixture solution by mixing a water-soluble polymer and a water-based solvent; and
   a step of irradiating ultraviolet (UV) light to the mixture solution for a predetermined time.

2. The method for preparing a polymer solution for an electrode slurry according to claim 1, wherein the water-soluble polymer comprises polyvinylidene fluoride (PVDF), polyvinyl alcohol (PVA), starch, polyvinylpyrrolidone (PVP), polytetrafluoroethylene (PTFE), polyethylene (PE), polypropylene (PP), ethylene-propylene-diene terpolymer (EPDM), sulfonated EPDM, styrene-butadiene rubber, fluorine rubber, methyl cellulose (MC), ethyl cellulose (EC), carboxymethyl cellulose (CMC), carboxyethyl cellulose (CEC), hydroxyethyl cellulose, benzyl cellulose, trityl cellulose, cyanoethyl cellulose, aminoethyl cellulose, nitrocellulose, cellulose ether, regenerated cellulose, hydroxypropyl cellulose (HPC), copolymers thereof, or mixtures thereof.

3. The method for preparing a polymer solution for an electrode slurry according to claim 2, wherein the water-soluble polymer comprises carboxymethyl cellulose (CMC).

4. The method for preparing a polymer solution for an electrode slurry according to claim 1, wherein the water-soluble polymer has a weight-average molecular weight ($M_w$) of 500,000-5,000,000 g/mol.

5. The method for preparing a polymer solution for an electrode slurry according to claim 1, wherein the water-soluble polymer is in the form of a powder.

6. The method for preparing a polymer solution for an electrode slurry according to claim 1, wherein the water-soluble polymer is comprised at a content of 0.1-5 wt% based on the total weight of the water-based solvent.

7. The method for preparing a polymer solution for an electrode slurry according to claim 1, wherein the wavelength of the irradiated ultraviolet light is 240-400 nm.

8. The method for preparing a polymer solution for an electrode slurry according to claim 7, wherein the wavelength of the irradiated ultraviolet light is 240-260 nm.

9. The method for preparing a polymer solution for an electrode slurry according to claim 1, wherein the ultraviolet light is irradiated while the mixture solution is being prepared.

10. The method for preparing a polymer solution for an electrode slurry according to claim 1, wherein the ratio of the ultraviolet light irradiation time to the total mixing time is 1-100%.

11. The method for preparing a polymer solution for an electrode slurry according to claim 1, wherein the ultraviolet light is irradiated throughout the total mixing time or irradiated for only a portion of the mixing time.

12. A polymer solution for an electrode slurry comprising a water-soluble polymer and a water-based solvent,

   which exhibits a viscosity change defined by [Equation 1] of -20 to 5% when stored at 23 °C for 7 days:

   [Equation 1]

   $$\text{Viscosity change (\%)} = (\text{Vis(d)} - \text{Vis(i)})/\text{Vis(i)} \times 100$$

   wherein
   Vis(i) is the initial viscosity of an electrode slurry,
   Vis(d) is the viscosity measured after storing for d days ($1 \leq d \leq 7$), and

the viscosity values are measured at 23 °C using a Brookfield viscometer (DV2T viscometer, 12 rpm, spindle 24).

13. An apparatus for preparing a polymer solution for an electrode slurry, comprising:

a mixing unit; and
an ultraviolet light irradiation unit configured to irradiate ultraviolet light to a mixture loaded in the mixing unit.

FIG. 1

FIG. 2

FIG. 3

FIG. 4

FIG. 5

## INTERNATIONAL SEARCH REPORT

| International application No. |
| --- |
| **PCT/KR2023/002488** |

| A. | CLASSIFICATION OF SUBJECT MATTER |
| --- | --- |
| | **H01M 4/62**(2006.01)i; **H01M 4/139**(2010.01)i; **H01M 10/052**(2010.01)i |

According to International Patent Classification (IPC) or to both national classification and IPC

| B. | FIELDS SEARCHED |
| --- | --- |

Minimum documentation searched (classification system followed by classification symbols)

H01M 4/62(2006.01); C08B 11/12(2006.01); H01G 11/06(2013.01); H01G 11/30(2013.01); H01M 4/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자(polymer), 바인더(binder), 자외선(ultraviolet), 점도(viscosity), 전극(electrode), 수계(aqueous), 슬러리(slurry), 이차전지(secondary-cell)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-150158 A (NIPPON SPINDLE MFG CO., LTD.) 27 September 2021 (2021-09-27)<br>See paragraphs [0022]-[0052], and claims 1-4. | 1-13 |
| A | KR 10-2021-0014627 A (ZEON CORPORATION) 09 February 2021 (2021-02-09)<br>See claims 1-10. | 1-13 |
| A | CN 112759657 A (ENVISION POWER TECHNOLOGY (JIANGSU) CO., LTD. et al.) 07 May 2021 (2021-05-07)<br>See claims 1-11. | 1-13 |
| A | JP 6363449 B2 (TOYOTA MOTOR CORP. et al.) 25 July 2018 (2018-07-25)<br>See claims 1-4. | 1-13 |
| A | CN 107078270 A (ZEON CORP.) 18 August 2017 (2017-08-18)<br>See claims 1-9. | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 June 2023** | **19 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/002488**

| Patent document cited in search report | | | Publication date (day/month/year) | Patent family member(s) | | | Publication date (day/month/year) |
|---|---|---|---|---|---|---|---|
| JP | 2021-150158 | A | 27 September 2021 | None | | | |
| KR | 10-2021-0014627 | A | 09 February 2021 | CN | 112042019 | A | 04 December 2020 |
| | | | | EP | 3806206 | A1 | 14 April 2021 |
| | | | | US | 2021-0305554 | A1 | 30 September 2021 |
| | | | | WO | 2019-225404 | A1 | 28 November 2019 |
| CN | 112759657 | A | 07 May 2021 | None | | | |
| JP | 6363449 | B2 | 25 July 2018 | JP | 2016-071955 | A | 09 May 2016 |
| CN | 107078270 | A | 18 August 2017 | CN | 107078270 | B | 25 May 2021 |
| | | | | CN | 107078298 | A | 18 August 2017 |
| | | | | CN | 107078298 | B | 06 November 2020 |
| | | | | CN | 107078299 | A | 18 August 2017 |
| | | | | CN | 107078299 | B | 13 November 2020 |
| | | | | EP | 3214675 | A1 | 06 September 2017 |
| | | | | EP | 3214675 | B1 | 10 July 2019 |
| | | | | EP | 3214676 | A1 | 06 September 2017 |
| | | | | EP | 3214676 | B1 | 27 March 2019 |
| | | | | HU | E043593 | T2 | 28 August 2019 |
| | | | | HU | E045221 | T2 | 30 December 2019 |
| | | | | JP | 2016-171074 | A | 23 September 2016 |
| | | | | JP | 6729385 | B2 | 22 July 2020 |
| | | | | JP | 6747297 | B2 | 26 August 2020 |
| | | | | JP | 6760074 | B2 | 23 September 2020 |
| | | | | JP | 6855681 | B2 | 07 April 2021 |
| | | | | KR | 10-2017-0076668 | A | 04 July 2017 |
| | | | | KR | 10-2017-0076668 | A | 04 July 2017 |
| | | | | KR | 10-2017-0078623 | A | 07 July 2017 |
| | | | | KR | 10-2017-0078624 | A | 07 July 2017 |
| | | | | KR | 10-2394269 | B1 | 03 May 2022 |
| | | | | KR | 10-2493662 | B1 | 31 January 2023 |
| | | | | PL | 3214675 | T3 | 28 February 2020 |
| | | | | PL | 3214676 | T3 | 30 August 2019 |
| | | | | US | 10044026 | B2 | 07 August 2018 |
| | | | | US | 2017-0244095 | A1 | 24 August 2017 |
| | | | | WO | 2016-067632 | A1 | 06 May 2016 |
| | | | | WO | 2016-067633 | A1 | 06 May 2016 |
| | | | | WO | 2016-067635 | A1 | 06 May 2016 |

Form PCT/ISA/210 (patent family annex) (July 2022)

**EP 4 391 118 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220026843